Europäisches Patentamt

European Patent Office

Office européen des brevets

(11) Numéro de publication : **0 573 337 A1**

# (12) DEMANDE DE BREVET EUROPEEN

(21) Numéro de dépôt : **93401367.3**

(22) Date de dépôt : **28.05.93**

(51) Int. Cl.$^5$ : **H04J 14/00, H04B 10/12**

(30) Priorité : **04.06.92 FR 9206799**

(43) Date de publication de la demande :
**08.12.93 Bulletin 93/49**

(84) Etats contractants désignés :
**AT BE CH DE ES FR GB IT LI NL SE**

(71) Demandeur : **ALCATEL CIT**
**12 Rue de la Baume**
**F-75008 Paris (FR)**

(72) Inventeur : **Adnet, Lionel**
**37, rue de la Tourelle**
**B-1040 Bruxelles (BE)**

(74) Mandataire : **El Manouni, Josiane et al**
**SOSPI 14-16, rue de la Baume**
**F-75008 Paris (FR)**

(54) **Procédé d'allocation de fréquences porteuses pour la transmission simultanée, notamment sur une liaison optique, d'une pluralité de signaux modulés.**

(57) Ce procédé est tel que lesdites fréquences porteuses sont choisies de la forme :

$$f = (2p + 1) n \pm k$$

où "p" est nombre entier propre à chaque fréquence porteuse, "n" représente une largeur de bande de fréquences donnée, et " k" représente une largeur de bande de fréquences donnée, éventuellement nulle, inférieure à "n", avec, soit n choisi suffisamment grand par rapport à la largeur des canaux fréquentiels occupés par lesdits signaux modulés pour que, dans le cas où "k" ≠0, des battements composites du second ordre tombent en dehors desdits canaux, soit, si n insuffisamment grand par rapport à la largeur desdits canaux, ou des plus larges d'entre eux au cas où tous ces canaux ne seraient pas de largeur identique, le système de transmission dimensionné pour que des battements composites du second ordre tombant à l'intérieur de tels canaux aient un écart suffisant par rapport à la porteuse pour ne pas perturber la transmission des signaux correspondants.

FIG. 3

EP 0 573 337 A1

La présente invention concerne un procédé d'allocation de fréquences porteuses pour la transmission simultanée, notamment sur une liaison optique, d'une pluralité de signaux modulés.

La présente invention est particulièrement applicable au cas de systèmes de transmission, notamment optiques, ayant un comportement non linéaire, à l'origine de l'apparition de battements composites pouvant, par leur situation par rapport aux canaux fréquentiels occupés par lesdits signaux modulés, perturber la transmission de ces signaux.

L'invention est plus particulièrement encore applicable, dans le cas de systèmes de transmission optiques, au cas de non linéarités résultant de l'utilisation, d'une part d'une source optique dite à modulation directe dont la longueur d'onde est compatible avec l'amplification optique à fibre dopée, telle qu'un laser à semi-conducteur dit à résonateur distribué, cette modulation directe entraînant en effet une fluctuation de la longueur d'onde de cette source, proportionnelle à la modulation appliquée, (ce phénomène étant connu sous le nom de "chirp"), et d'autre part d'une fibre optique dite à dispersion chromatique, une telle fibre entraînant en effet une distorsion de temps de propagation en fonction de la fréquence dans le domaine spectral ainsi couvert.

Différentes solutions ont été proposées pour résoudre les problèmes liés à la génération de tels battements composites, dont l'amplitude est en outre d'autant plus importante que la longueur de la liaison optique est grande.

Une première solution consiste à employer comme support de transmission une fibre optique dite à dispersion décalée afin de neutraliser la dispersion chromatique.

Un telle solution est décrite par exemple dans les documents suivants :
- Dispersion induced Composite Second Ordre Distorsion at 1.55μm (Bergmann/Kuo/ Huang) (ATT Bell Laboratories) IEEE Photonics Letter, Volume 3, n°1, Janvier 91
- Impact of dispersion on analog video transmission (Williamson - American Television and Communications Corporation - and Wolfe - Corning Inc.) NCTA Technical Papers, 1991 page 20.

Une telle solution a cependant pour inconvénient d'être peu économique compte tenu du fait que ce type de fibre est plus difficile à fabriquer, et donc plus cher.

Une deuxième solution consiste à compenser électriquement ces phénomènes par un circuit non linéaire. Une telle solution est décrite par exemple dans les documents suivants :
- Impact of dispersion analog video transmission (Williamson - American Television and Communications Corporation - and Wolfe - Corning Inc.) NCTA Technical Papers, 1991 page 20,
- Electrical presdistorsion to compensate for combined effet of laser chirp and fibre dispersion (Gysel/Ramachandran) (Synchronous Communications Corp.). Electronics Letters, Février 1991, volume 27, n°5, page 421.

Cependant la faisabilité d'une telle correction est encore en question notamment dans la bande UHF jusqu'à 860 MHz.

L'invention a pour but de résoudre les problèmes liés à la génération de battements composites, plus particulièrement de ceux dits du second ordre, situés à des fréquences correspondant à une somme ou à une différence de deux fréquences porteuses, et ce au moyen d'une solution différente de celles ainsi rappelées et n'en présentant pas les inconvénients.

La présente invention s'applique notamment aux réseaux câblés de vidéocommunication, pour lesquels lesdits signaux modulés sont des signaux de télévision transmis en modulation d'amplitude à bande latérale résiduelle, et pour lesquels l'allocation desdites fréquences porteuses fait en outre l'objet de normalisation, au plan international ou national.

La présente invention a pour objet un procédé d'allocation de fréquences porteuses pour la transmission simultanée, notamment sur une liaison optique, d'une pluralité de signaux modulés, essentiellement caractérisé en ce que lesdites fréquences porteuses sont choisies de la forme :

$$f = (2p + 1)\,n \pm k$$

où "p" est un nombre entier propre à chaque fréquence porteuse, "n" représente une largeur de bande de fréquences donnée, et " k" représente une largeur de bande de fréquences donnée, éventuellement nulle, inférieure à "n",

avec, soit "n" choisi suffisamment grand par rapport à la largeur des canaux fréquentiels occupés par lesdits signaux modulés pour que, dans le cas où "k" ≠ 0, les battements composites du second ordre tombent en dehors desdits canaux, soit, si n insuffisamment grand par rapport à la largeur desdits canaux, ou des plus larges d'entre eux au cas où ces canaux ne seraient pas de largeur identique, le système de transmission dimensionné pour que des battements composites du second ordre tombant à l'intérieur de tels canaux aient un écart suffisant par rapport à la porteuse pour ne pas perturber la transmission des signaux correspondants .

Suivant une autre caractéristique de l'invention la bande de fréquences incluant lesdites fréquences porteuses est divisée en deux bandes, l'une dite inférieure, l'autre dite supérieure, et ces fréquences porteuses sont, dans l'une de ces bandes, choisies de la forme :

$$f = (2p + 1)\,n \pm k$$

avec k ≠ 0

et, dans l'autre de ces bandes, de la forme :

$$f = (2p + 1)\,n$$

en vue de réduire, ou de faire disparaître, les éventuelles perturbations dues à des battements composites du second ordre, sans avoir à agir, ni sur le rapport entre la largeur de bande "n" et la largeur desdits canaux, ni sur le dimensionnement du système de transmission.

D'autres objets et caractéristiques de la présente invention apparaîtront à la lecture de la description suivante d'exemples de réalisation, faite en relation avec les dessins ci-annexés dans lesquels:

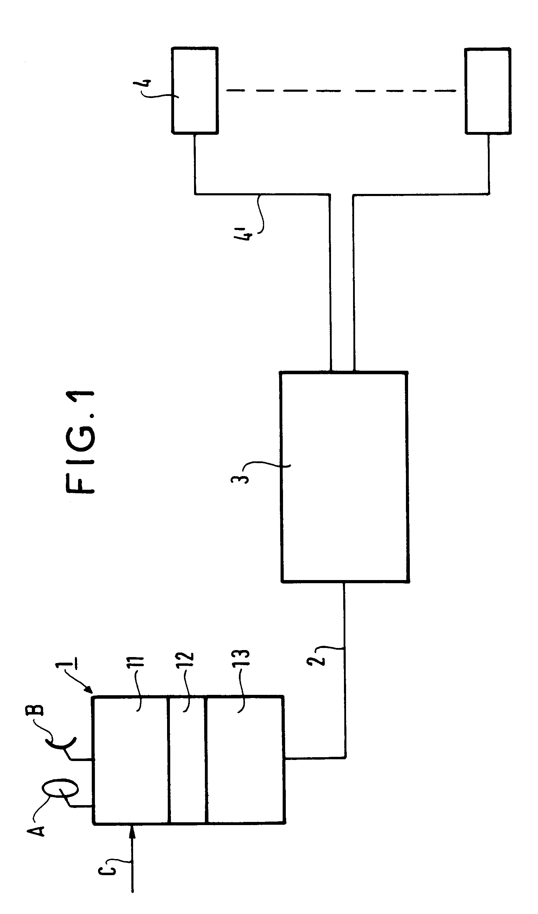

- la figure 1 est un schéma synoptique d'un réseau câblé de vidéocommunication, illustrant un exemple d'application de la présente invention,

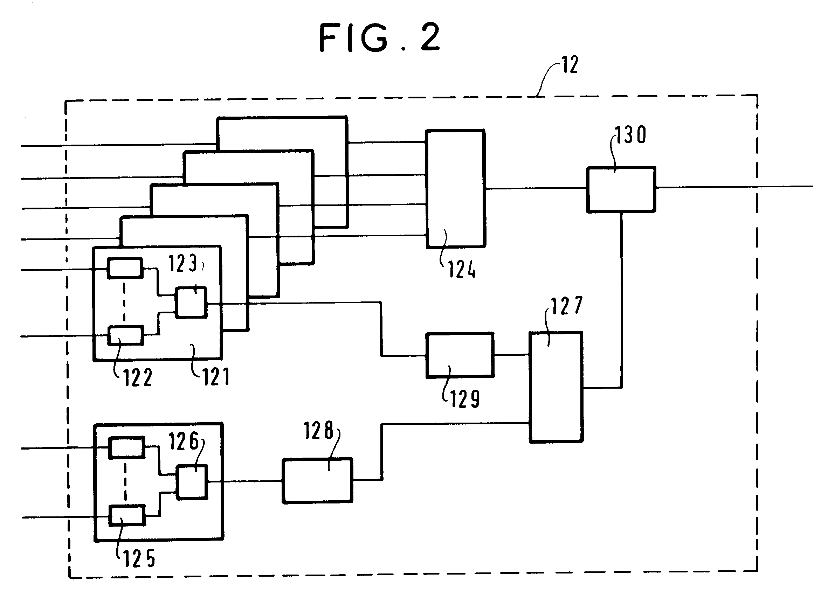

- la figure 2 est un schéma synoptique de l'équipement dit de modulation utilisé, dans un réseau du type illustré sur la figure 1, pour la génération des signaux modulés transmis sur ce réseau,

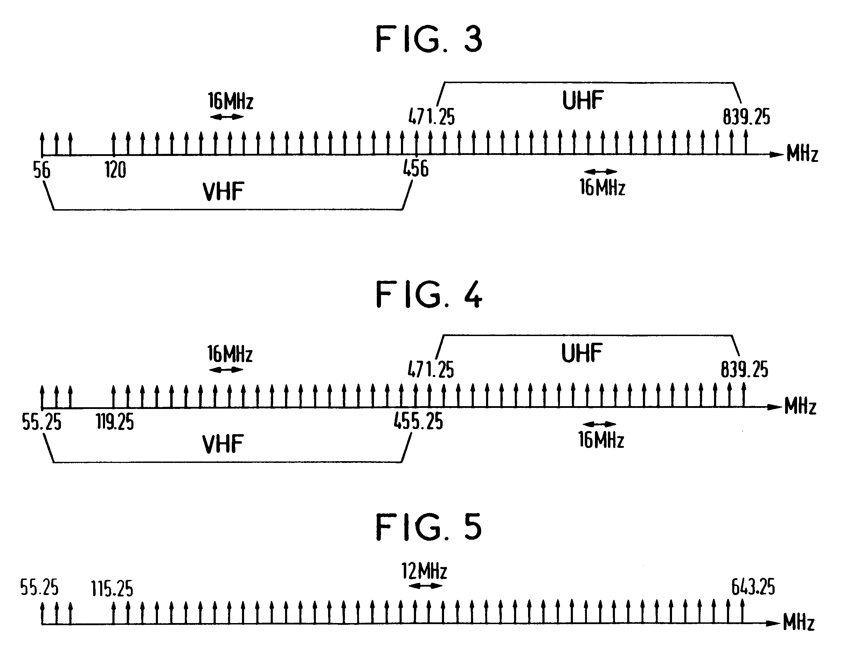

- la figure 3 est un diagramme représentant, de façon schématique, et à titre d'exemple, un plan de fréquences obtenu suivant la présente invention et utilisable dans le cas où lesdits signaux modulés sont des signaux de télévision transmis en modulation d'amplitude à bande latérale résiduelle et où ladite allocation doit respecter la norme dite L,
- la figure 4 est un diagramme représentant, de façon schématique, et à titre d'exemple, un plan de fréquences obtenu suivant la présente invention et utilisable dans le cas où lesdits signaux modulés sont des signaux de télévision transmis en modulation d'amplitude à bande latérale résiduelle et où ladite allocation doit respecter la norme dite B, G, H, I,
- la figure 5 est un diagramme représentant, de façon schématique, et à titre d'exemple, un plan de fréquences obtenu suivant la présente invention et utilisable dans le cas où lesdits signaux modulés sont des signaux de télévision transmis en modulation d'amplitude à bande latérale résiduelle et où ladite allocation doit respecter la norme dite M.

L'invention sera plus particulièrement décrite dans ce qui suit dans le cadre de son application à des réseaux câblés de vidéocommunication, pour lesquels l'allocation des fréquences porteuses fait l'objet de deux types de normes.

On rappelle brièvement que suivant un premier type de norme en vigueur en Europe, la bande de fréquences incluant les fréquences porteuses allouables est divisée en deux bandes, l'une dite inférieure, située dans la gamme de fréquences dite VHF, et l'autre dite supérieure, située dans la gamme de fréquences dite UHF, les fréquences allouables allant, dans le cas de la bande UHF, de 471.25 MHz à 839.25 MHz par pas de 8MHz, et, dans le cas de la bande VHF, en France, de 120 MHz à 288 Mhz par pas de 8MHz, et dans les pays autres que la France, de 303.25 MHz à 455.25 MHz par pas de 8 MHz.

On rappelle de même que suivant un deuxième type de norme, en vigueur en Amérique du Nord et au Japon, la bande de fréquences incluant les fréquences porteuses allouables est située dans la gamme de fréquences dite VHF, ces fréquences allouables allant de 55.25 MHz à 643.25 MHz par pas de 6 MHz.

Le premier type de norme correspond aux systèmes dits de norme B, G, H et I pour les pays d'Europe autres que la France, et L pour la France.

Le deuxième type de norme correspond aux systèmes dits de norme M.

La figure 1 représente de façon schématique un réseau câblé de vidéocommunication auquel la présente invention est applicable.

On distingue sur la figure 1 un ensemble 1 appelé centre d'exploitation du réseau, et comportant en l'occurrence:

- un équipement 11 appelé tête de réseau, pouvant, comme symbolisé sur cette figure respectivement en A, B, C, recevoir des programmes de télévision par satellite, par liaison hertzienne ou par une artère numérique, et démodulant en bande de base les signaux ainsi reçus,
- un équipement de modulation 12, apte à fournir des signaux modulés, par modulation de différentes porteuses, internes à cet équipement de modulation, par les différents signaux en bande de base obtenus,
- un équipement 13 de conversion des signaux électriques obtenus en sortie de l'équipement de modulation 12, en signaux optiques, et d'amplification des signaux optiques ainsi obtenus, notamment au moyen d'un ou plusieurs amplificateurs optiques à fibre dopée.

Les signaux optiques obtenus en sortie du centre d'exploitation 1 sont acheminés, sur des liaisons optiques dites de transport, dont une seule, référencée 2, est représentée sur la figure 1, vers des ensembles appelés généralement centres de distribution, dont un seul est, de même, représenté sur la figure 1, où il est référencé 3.

Le centre de distribution 3 permet de distribuer à N équipements dits d'usager, tels que celui référencé 4, par N liaisons optiques dites de distribution telles que celle référencée 4', formant un réseau dit de distribution, les signaux optiques reçus du centre d'exploitation. Le centre de distribution assure en outre une fonction d'amplification des signaux optiques reçus et émis.

L'équipement de modulation 12 illustré sur la figure 2 comporte essentiellement une batterie de modulateurs (en nombre égal au nombre maximum de canaux de télévision transmissibles sur ce réseau) dont les sorties sont reliées à une même ligne coaxiale par l'intermédiaire de moyens de couplage. En l'occurrence cet équipement de modulation comporte:

- une première batterie de modulateurs dédiée à des programmes TV, en l'occurrence en nombre maximum égal à 40, cette première batterie de modulateurs étant elle-même organisée en cinq ensembles tels que 121 de huit modulateurs, tels que 122, les sorties de ces modulateurs tels que 122 étant couplées à une même ligne coaxiale par l'intermédiaire d'un coupleur tel que 123, et en l'occurrence les sorties de quatre des ensembles tels que 121 étant couplées à une même ligne coaxiale par l'intermédiaire d'un coupleur 124,

- une deuxième batterie de modulateurs dédiée à des programmes HIFI, en l'occurrence en nombre maximum égal à 30, comportant elle-même un ensemble de 30 modulateurs tels que 125 dont les sorties sont couplées à une même ligne coaxiale par l'intermédiaire d'un coupleur 126.

La sortie du coupleur 126 et la sortie de celui des cinq ensembles qui n'est pas connectée au coupleur 124 sont en l'occurrence couplées à une même ligne coaxiale par l'intermédiaire d'un coupleur 127, après avoir été attenuées, respectivement par des atténuateurs 128 et 129.

Les sorties des coupleurs 124 et 127 sont à leur tour couplées à une même ligne coaxiale, par l'intermédiaire d'un coupleur 130 dont la sortie constitue la sortie de cet équipement de modulation.

L'idée générale de base pour un procédé d'allocation de fréquences porteuses permettant d'ignorer les battements composites du second ordre pour des canaux de télévision de largeur nominale n MHz est d'allouer à ces canaux des fréquences porteuses multiples impaires de n MHz.

Les fréquences porteuses sont alors définies par

$$f (MHz) = (2p + 1) \times n$$

avec p entier.

Toute somme ou différence de deux porteuses ainsi définies génère alors un battement composite du second ordre tombant à une fréquence $2q \times n$ MHz (avec q entier) multiple paire de n MHz et donc avec un écart de + n MHz par rapport à la fréquence porteuse $(2q - 1) \times n$ MHz et de - n MHz par rapport à la fréquence porteuse $(2q+1) \times n$ MHz, et donc l'effet du battement composite du second ordre sur ces deux canaux de largeur n MHz est nul.

La largeur "n" étant, dans le cas de la norme M, égale à 6 MHz, les fréquences porteuses peuvent donc, en théorie, être choisies multiples impaires de 6 MHz.

Dans le cas des normes B, G, H, I et L cette largeur nominale "n" est égale à 8 MHz dans la bande UHF, ou à 8 ou 12 MHz dans la bande VHF, suivant le type de signal de télévision considéré. Les fréquences porteuses peuvent donc, en théorie, être choisies multiples impaires de 8 MHz ou de 12 MHz. Avantageusement on choisira des fréquences porteuses multiples impaires de 8 MHz de manière à garantir un effet nul des battements composites du second ordre dans la bande UHF et à obtenir le plus grand nombre possible de canaux utilisables dans la bande VHF (le choix de fréquences porteuses multiples impaires de 12 MHz étant possible mais conduisant à un nombre plus faible de canaux utilisables et ne respectent pas l'espacement inter-canal de 8 MHz en UHF en vigueur en Europe). On a alors pour la bande VHF des canaux de largeur 12 MHz (pour des signaux de type D2MAC au format 16/9) souffrant de battements composites du second ordre tombant à + 8 MHz de la fréquence porteuse. Ceci doit cependant être tempéré par le fait qu'en pratique la protection demandée à la prise d'abonné d'un réseau de vidéocommunication, conformément aux normes en vigueur, pour des signaux de type D2MAC 16/9, est alors diminuée par rapport au cas le plus défavorable où le battement composite du second ordre tombe avec un écart de O MHz par rapport à la fréquence porteuse (en pratique 23 dB dans le premier cas contre 56 dB dans le deuxième cas, soit une diminution de 33 dB).

Dans la réalité, pour respecter les normes en vigueur pour l'allocation des fréquences porteuses, telles que rappelées plus haut, on est amené à considérer les allocations de fréquences suivantes :

$$f(MHz) = (2p + 1) \times 8 - 0.75 \quad (1)$$
$$f(MHz) = (2p + 1) \times 6 + 1.25 \quad (2)$$

Ceci a simplement effet de translater de - 0.75 MHz (respectivement + 1.25 MHz) autour de 8 MHz (respectivement 6 MHz) l'écart en fréquence entre les battements composites du second ordre du type F1 + F2 et les porteuses vision des canaux, et de + 0.75 MHz (respectivement - 1.25 MHz) autour de 8 MHz (respectivement 6 MHz) l'écart en fréquence entre les battements composites du second ordre du type F1 - F2 et les porteuses vision des canaux.

Comme, dans le cas des systèmes de norme M, un canal correspondant à un signal de télévision de type NTSC n'occupe qu'une place de - 0.75 MHz à + 4.2 Mhz par rapport à la porteuse vision et que la porteuse son est située à 4.5 MHz de la porteuse vision et qu'elle est modulée en fréquence avec une excursion de $\pm$ 0.025 MHz, un battement composite du second ordre qui tombe à + 6 - 1.25 = + 4.75 MHz de la porteuse vision du canal de rang (2q - 1) ou -6 - 1.25 = -7.25 MHz de la porteuse vision du canal de rang (2q+1) est sans effet sur ces deux canaux. Quant à un battement composite du second ordre tombant à + 6 + 1.25 = + 7.25 MHz de la porteuse vision du canal de rang (2q - 1) ou - 6 + 1.25 = - 4.75 MHz de la porteuse vision du canal de rang (2q+1), il est bien sûr sans effet sur ces deux canaux.

La relation (2) ci-dessus définit donc le principe d'un plan de fréquence adapté aux systèmes de norme M.

Comme un canal correspondant à un signal de télévision de type D2MAC 4/3 n'occupe qu'une place de - 1.25 MHz à + 6.5 MHz par rapport à la porteuse vision, qu'un canal de norme B, G, H ou I (cas pire pour la norme I) n'occupe qu'une place de - 1.25 MHz à + 5.5 MHz par rapport à la porteuse vision et que la porteuse son est située à + 6 MHz de la porteuse vision (cas pire pour la norme I) et qu'elle est modulée en fréquence avec une excursion de $\pm$ 0.050 MHz, un battement composite du second ordre qui tombe à + 8 - 0,75 = + 7.25 MHz de la porteuse vision du canal de rang (2q - 1) ou 8 - 0.75 = - 8.75 MHz de la porteuse vision du canal de rang (2q+1) est sans effet sur ces deux canaux. Quant à un battement composite du second ordre tombant à + 8 + 0.75 = + 8.75 MHz de la porteuse vision du canal de rang (2q-1) ou - 8 + 0.75 = - 7.25 MHz de la porteuse vision du canal de rang (2q+1), il est bien sûr sans effet sur ces deux canaux.

Seul est à considérer l'effet d'un battement composite du second ordre à + 7.25 MHz ou + 8.75 MHz de la fréquence porteuse sur des canaux VHF de largeur 12 MHz pour des signaux de type D2MAC au format 16/9. Cependant la protection demandée à la prise d'abonné, conformément aux normes en vigueur, pour les canaux D2MAC 16/9, à + 7.25 MHz de la porteuse (respectivement à + 8.75 MHz de la porteuse) est de 27 dB (respectivement 13 dB) ce qui représente une diminution de 29 dB (respectivement 43 dB) par rapport au cas le plus défavorable (56 dB) où le battement composite tombe avec un écart de 0 MHz par rapport à la fréquence porteuse.

La relation (1) ci-dessus définit donc le principe d'un plan de fréquence adapté aux systèmes de normes B, G, H et I.

Dans le cas des systèmes de norme L, la protection demandée à la prise d'abonné, conformément aux normes en vigueur, à + 7.25 MHz de la fréquence porteuse, est de 34 dB. On a donc dans ce cas une contrainte supplémentaire sur les battements composites du second ordre, pour les canaux de largeur 8 MHz.

En examinant l'origine de tels battements composites du second ordre tombant dans les canaux UHF utilisés à + 7.25 MHz de la fréquence porteuse, on voit qu'ils sont dûs uniquement aux combinaisons de type $F1_{VHF} + F2_{UHF}$ ou de type $F1_{VHF} + F2_{VHF}$.

Pour éviter cette contrainte supplémentaire on conserve pour les allocations dans la bande UHF le principe décrit ci-dessus pour les systèmes de normes B, G, H et I, à savoir

$$f_{UHF} \text{ (MHz)} = (2p + 1) \times 8 - 0,75 \quad (3)$$

et on décale de + 0,75 MHz les allocations des fréquences porteuses dans la bande VHF pour obtenir une formule générique :

$$f_{VHF} \text{ (MHz)} = (2p + 1) \times 8 \quad (4)$$

Les battements du type $F1_{VHF} + F2_{UHF}$ sont alors (2m +1) x 8 - 0.75 + (2p+1) x 8 = 2q x 8 - 0.75 MHz avec q = m+p +1. Ils tombent donc avec un écart de + 8 MHz par rapport à la fréquence porteuse UHF (2q-1) x 8 - 0.75 MHz et de - 8 MHz par rapport à la fréquence porteuse UHF (2q+1) x 8 - 0.75 MHz et leurs effets sur ces deux canaux de largeur 8 MHz est nul même pour des canaux UHF de type SECAM ou D2MAC 4/3.

Les battements du type $F1_{VHF} + F2_{VHF}$ sont alors (2m +1) x 8 + (2p+1) x 8 = 2q x 8 = (2q-1) x 8 - 0.75 + 8.75 MHz avec q = m + p + 1. Ils tombent donc avec un écart de + 8.75 MHz par rapport à la fréquence porteuse UHF (2q+1) x n- 0.75 MHz et leurs effets sur ces deux canaux de largeur 8 MHz est nul même pour des canaux de type SECAM ou D2MAC 4/3.

Dans le même temps les battements du type $F1_{UHF} - F2_{VHF}$ sont alors (2m+1) x 8 - 0.75 - (2p+1) x 8 = 2q x 8 - 0.75 MHz avec q = m + p. Ils tombent donc avec un écart de + 8 MHz par rapport à la fréquence porteuse UHF (2q-1) x 8 - 0.75 MHz et de - 8 MHz par rapport à la fréquence porteuse UHF (2q +1) x 8 - 0.75 MHz et leurs effets sur ces deux canaux de largeur 8 MHz est nul même pour des canaux de type SECAM ou D2MAC 4/3.

Les combinaisons $F1_{UHF} \pm F2_{UHF}$ ne donnent pas de battements composites du second ordre retombant dans la bande UHF utilisée.

En prenant comme allocation des fréquences porteuses dans la bande VHF f(MHz)= (2p+1) x 8 MHz, on a donc éliminé totalement la contrainte sur les battements composites du second ordre pour les canaux UHF de largeur de bande 8 MHz dans le cas de la norme L.

L'examen des battements composites du second ordre tombant cette fois dans la bande VHF montre que seuls sont à considérer les battements du type $F1_{VHF} \pm F2_{VHF}$, $F1_{UHF} - F2_{UHF}$ et $F1_{UHF} - F2_{VHF}$.

Les battements du type $F1_{VHF} \pm F2_{VHF}$ sont donc (2m+1) x 8 $\pm$ (2p+1) x 8 = 2q x 8 MHz avec q = m+p+1 ou m - p. Ils tombent donc avec un écart de + 8 MHz par rapport à la fréquence porteuse VHF (2q-1) x 8 MHz et de - 8 MHz par rapport à la fréquence porteuse VHF (2q+1) x 8 MHz et leurs effets sur ces deux canaux est nul pour des canaux de type SECAM ou D2MAC 4/3. Seul est à considérer l'effet d'un battement composite du second ordre à + 8 MHz de la fréquence porteuse sur des canaux VHF de largeur 12 MHz pour des signaux D2MAC au format 16/9. Cependant la protection demandée à la prise d'abonné pour des canaux D2MAC 16/9 à + 8 MHz de la porteuse est de 23 dB ce qui représente une diminution de 33 dB par rapport au cas le plus défavorable (56 dB) où le battement composite du second ordre tombe avec un écart de 0 MHz par rapport à la fréquence porteuse.

Les battements du type $F1_{UHF} - F2_{UHF}$ sont donc (2m +1) x 8 - 0.75 - ((2p +1) x 8-0.75) = 2q x 8 MHz avec q = m-p. Ils tombent donc avec un écart de + 8 MHz par rapport à la fréquence porteuse VHF (2q-1) x 8 MHz et de - 8 MHz par rapport à la fréquence porteuse VHF (2q+1) x 8 MHz et leurs effets sur ces deux canaux est nul pour des canaux de type SECAM ou D2MAC 4/3. Seul est à considérer l'effet d'un battement composite du second ordre à + 8 MHz de la fréquence porteuse sur des canaux VHF de largeur 12 MHz pour des canaux D2MAC au format 16/9. Cependant la protection demandée à la prise d'abonné pour des canaux D2MAC 16/9 à + 8MHz de la porteuse est de 23 dB ce qui représente une diminution de 33 dB par rapport au cas le plus défavorable (56 dB) où le battement composite du second ordre tombe avec un écart de O MHz par rapport à la fréquence porteuse.

Les battements du type $F1_{UHF}$ - $F2_{VHF}$ sont donc (2m+1) x 8-0.75 - (2p+1) x 8 = (2q- 1) x 8+ 8 - 0.75 MHz avec q=m-p. Ils tombent donc avec un écart de + 7.25 MHz par rapport à la fréquence porteuse VHF (2q-1) x 8 MHz et de - 8.75 MHz par rapport à la fréquence porteuse VHF (2q+1) x 8 MHz et leurs effets sur ces deux canaux est nul pour des canaux de type D2MAC 4/3. Seul est à considérer l'effet d'un battement composite du second ordre à + 7.25 MHz de la fréquence porteuse sur des canaux VHF de largeur 8 MHz ou 12 MHz pour des signaux de type SECAM ou D2MAC au format 16/9. Cependant la protection demandée à la prise d'abonné, conformément aux normes en vigueur, pour des canaux SECAM (respectivement D2MAC 16/9) à + 7.25 MHz de la porteuse est de 34 dB (respectivement 27 dB) ce qui représente une diminution de 22 dB (respectivement 29 dB) par rapport au cas le plus défavorable (56 dB) où le battement composite du second ordre tombe avec un écart de 0.5 à 1 MHz (respectivement O MHz) par rapport à la fréquence porteuse.

Les relations (3) et (4) ci-dessus définissent donc le principe d'un plan de fréquence adapté aux systèmes de norme L.

A titre d'exemple, on pourra ainsi choisir, dans le cas des systèmes de norme L, comme illustré sur la figure 3:
- 24 fréquences porteuses UHF, positionnées à partir de 471.25 MHz et jusqu'à 839.25 MHz, par pas de 16 MHz,
- 24 fréquences porteuses VHF, choisies dans la bande 47 - 470 OMHz en évitant la bande FM, par exemple les fréquences suivantes :
  56 MHz, 72 MHz, 120 MHz à 456 MHz par pas de 16 MHz.

A titre d'exemple on pourra ainsi choisir, dans le cas des systèmes de norme B, G, H, I, comme illustré sur la figure 4:
- 24 fréquences porteuses UHF positionnées à partir de 471.25 MHz et jusqu'à 839.25 MHz, par pas de 16 MHz,
- 24 fréquences porteuses VHF, choisies dans la bande 47-470 MHz en évitant la bande FM, par exemple les fréquences suivantes :
  55.25 MHz, 71.25 MHz, 119.25 MHz à 455.25 MHz par pas de 16 MHz.

A titre d'exemple, on pourra ainsi choisir, dans le cas des systèmes de norme M, comme illustré sur la figure 5, 48 fréquences porteuses ayant les valeurs suivantes :
  55.25 MHz, 67.25 MHz, 79.25 MHz, 115.25 MHz à 643.25 MHz par pas de 12 MHz.

Le plan de fréquences ainsi défini pour un système de norme M permet donc d'éviter toutes contraintes liées aux battements composites du second ordre.

Seules demeurent pour les plans de fréquences ainsi définis pour des systèmes de norme B, G, H, I, L des contraintes pour les canaux VHF seulement.

On peut montrer que pour une distance de transmission dispersive jusqu'à 30 km, ces contraintes relatives aux battements composites du second ordre pour les canaux VHF pour ces plans de fréquence sont toujours satisfaites pour des lasers dont la fluctuation de la longueur d'onde en fonction de la modulation appliquée (ou "chirp") est inférieure à 1200 MHz/mW couplé dans la fibre.

En effet, la contribution de cette fluctuation (ou "chirp")du laser et de la dispersion de la fibre en termes de battements composites du second ordre peut être calculée par la formule suivante :
$$m^2.N.(Po.C.L.D.2\,\pi\,F.(\lambda^2/c))^2$$
avec :

N nombre de battements du type F1 ± F2 causant le battement composite du second ordre observé à la fréquence F, m indice de modulation du laser par canal TV, Po puissance du laser couplée dans la fibre exprimée en mW, C fluctuation de la longueur d'onde du laser en fonction de la modulation appliquée à la fréquence de modulation F, exprimée en MHz/mW couplé dans la fibre, F fréquence du battement composite du second ordre exprimée en MHz, D dispersion chromatique de la fibre à la longueur d'onde considérée exprimée en ps/(nm.km), L distance de transmission exprimée en km, $\lambda$ longueur d'onde exprimée en nm, c vitesse de la lumière exprimée en nm/s.

On montre par ailleurs que les cas les plus défavorables pour ces contraintes liées aux battements composites du second ordre pour les canaux VHF sont
- pour le plan de fréquence défini plus haut pour les systèmes B, G, H, I, F = 464 MHz où le produit $N.F^2$ est maximum avec N = 19 pour les battements F1- F2 et où la protection demandée est de 13 dB; F= 462.5 MHz où le produit $N.F^2$ est maximum avec N=10.25 pour les battements F1 + F2 et où la protection demandée est de 27 dB.
- pour le plan de fréquence défini plus haut pour le système L, F = 463.25 MHz où le produit $N.F^2$ est maximum avec N = 10 et où la protection demandée est de 34 dB.

C'est ce dernier cas qui est le plus contraignant.

Pour un indice de modulation m maximum de 6.5 % pour 40 à 45 canaux modulant directement un laser dit à résonateur distribué (ou DFB), avec N = 19, Po = $P_o$ maximum = 3mW, $\lambda$ = 1550 nm, D= 19 ps/nm.km, c= $3.10^{17}$ nm/s,C. L= 36500 km.MHz/mW, on obtient pour ce cas le plus défavorable une contribution de la fluctuation de la longueur d'onde (ou "chirp") du laser et de la dispersion de la fibre, en termes de battements composites du second ordre, égale à - 38 dB.

La protection demandée à la prise d'abonné étant de 34 dB pour ce cas le plus défavorable, on voit que si l'ensemble des autres non linéarités du second ordre du système (émetteur optique, amplificateurs, récepteur optique) ne contribuent pas à plus de 45 dB par exemple en termes de battements composites du second ordre, on aura toujours au moins 37 dB de protection à la prise d'usager. Or 45 dB de contribution en battements composites du second ordre est bien inférieur à ce que l'état de l'art permet de réaliser aujourd'hui.

La seule condition porte donc sur le produit de la fluctuation de la longueur d'onde (ou "chirp") du laser par la distance de transmission. A titre d'exemple, pour des lasers ayant une fluctuation inférieure à 1200 MHz/mW couplé dans la fibre, des distances de transmission jusqu'à 30 km peuvent cependant être réalisées.

Bien que la description qui précède ait été faite plus particulièrement, à titre d'exemple, pour le cas de réseaux câblés de vidéocommunication pour lesquels lesdits signaux modulés sont des signaux de télévision transmis en modulation d'amplitude à bande latérale résiduelle, et pour lesquels l'allocation desdites fréquences porteuses fait en outre l'objet de normalisation, on comprendra que l'invention n'est pas limitée à une telle application.

## Revendications

1) Procédé d'allocation de fréquences porteuses pour la transmission simultanée, notamment sur une liaison optique, d'une pluralité de signaux modulés, caractérisé en ce que lesdites fréquences porteuses sont choisies de la forme :

$$f = (2p + 1) n \pm k$$

où "p" est nombre entier propre à chaque fréquence porteuse, "n" représente une largeur de bande de fréquences donnée, et " k" représente une largeur de bande de fréquences donnée, éventuellement nulle, inférieure à "n",

avec, soit n choisi suffisamment grand par rapport à la largeur des canaux fréquentiels occupés par lesdits signaux modulés pour que, dans le cas où "k" $\neq$ 0, des battements composites du second ordre tombent en dehors desdits canaux, soit, si n insuffisamment grand par rapport à la largeur desdits canaux, ou des plus larges d'entre eux au cas où tous ces canaux ne seraient pas de largeur identique, le système de transmission dimensionné pour que des battements composites du second ordre tombant à l'intérieur de tels canaux aient un écart suffisant par rapport à la porteuse pour ne pas perturber la transmission des signaux correspondants.

2) Procédé selon la revendication 1, caractérisé en ce que la bande de fréquences incluant lesdites fréquences porteuses est divisée en deux bandes, l'une dite inférieure, l'autre dite supérieure, et ces fréquences porteuses sont, dans l'une de ces bandes, choisies de la forme :

$$f = (2p + 1) n \pm k$$

avec k $\neq$ 0

et, dans l'autre de ces bandes, choisies de la forme :

$$f = (2p + 1) n$$

en vue de réduire, ou de faire disparaître, les éventuelles perturbations dues à des battements composites du second ordre, sans avoir à agir, ni sur le rapport entre la largeur de bande "n" et la largeur desdits canaux, ni sur le dimensionnement du système de transmission.

3) Procédé selon la revendication 1, caractérisé en ce que lesdits signaux modulés étant des signaux de télévision transmis en modulation d'amplitude à bande latérale résiduelle et ladite allocation devant respecter les normes dites B, G, H, I, les fréquences allouées comportent, dans la bande UHF, les fréquences allant de 471.25 MHz à 839.25 MHz, par pas de 16 MHz, et, dans la bande VHF, les fréquences 55.25 MHz, 71.25 MHz, et 119.25 MHz à 455.25 MHz par pas de 16 MHz.

4) Procédé selon la revendication 2, caractérisé en ce que lesdits signaux modulés étant des signaux de télévision transmis en modulation d'amplitude à bande latérale résiduelle et ladite allocation devant respecter la norme dite L, les fréquences alloueées comportent, dans la bande UHF, les fréquences allant de 471.25 MHz 839.25 MHz, par pas de 16 MHz, et, dans la bande VHF, les fréquences 56 MHz, 72 MHz et 120 MHz à 456 MHz, par pas de 16 MHz.

5) Procédé selon la revendication 1, caractérisé en ce que lesdits signaux modulés étant des signaux de télévision transmis en modulation d'amplitude à bande latérale résiduelle et ladite allocation devant respecter la norme dite M, les fréquences allouées comportent les fréquences 55.25 MHz, 67.25 MHz, 79.25 MHz, et 115.25 MHz à 643.25 MHz par pas de 12 MHz.

FIG.1

FIG. 2

# FIG. 3

16MHz

UHF
471.25                    839.25

56    120                           456
VHF
16MHz

# FIG. 4

16MHz

UHF
471.25                    839.25

55.25   119.25                      455.25
VHF
16MHz

# FIG. 5

12MHz

55.25   115.25                      643.25

EP 0 573 337 A1

EP 0 573 337 A1

Office européen
des brevets

**RAPPORT DE RECHERCHE EUROPEENNE**

Numero de la demande

EP 93 40 1367

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 953 156 (OLSHANSKY ET AL) <br> * colonne 6, ligne 62 - colonne 7, ligne 24; figure 1 * <br> --- | 1-5 | H04J14/00 <br> H04B10/12 |
| A | ELECTRONICS LETTERS. <br> vol. 27, no. 7, 28 Mars 1991, STEVENAGE GB <br> pages 600 - 601 <br> LEE ET AL 'Uniform CNR design rules for coherent subcarrier multiplexed system with multioctave frequency allocation' <br> * page 600, colonne de gauche, ligne 4 - colonne de droite, ligne 6 * <br> --- | 1-5 | |
| A | US-A-5 107 360 (HUBER) <br> * colonne 1, ligne 44 - ligne 46 * <br> * colonne 3, ligne 16 - colonne 4, ligne 6; figures 1-4 * <br> ----- | 1-5 | |

|  | DOMAINES TECHNIQUES RECHERCHES (Int. Cl.5) |
|---|---|
|  | H04J |

Le présent rapport a été établi pour toutes les revendications

| Lieu de la recherche | Date d'achèvement de la recherche | Examinateur |
|---|---|---|
| LA HAYE | 27 AOUT 1993 | WILLIAMS Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................................................
& : membre de la même famille, document correspondant

EPO FORM 1503 03.82 (P0402)

11